# EUROPÄISCHE PATENTSCHRIFT

(11) **EP 2 490 912 B1**
(45) Veröffentlichungstag und Bekanntmachung des Hinweises auf die Patenterteilung: **17.07.2013**
(21) Anmeldenummer: 10768734.5
(22) Anmeldetag: 13.10.2010
(51) Int. Cl.: B60K 11/08, G01D 11/28, G01D 13/26, G01P 1/08, B60K 37/02

(54) **ANZEIGEINSTRUMENT MIT EINEM ZEIGER**
DISPLAY INSTRUMENT HAVING A POINTER
INSTRUMENT D'AFFICHAGE DOTÉ D'UNE AIGUILLE

(30) Priorität: 24.10.2009 DE 102009050580; 24.08.2010 DE 102010035240
(43) Veröffentlichungstag der Anmeldung: 29.08.2012
(73) Patentinhaber: Johnson Controls Automotive Electronics GmbH, 75196 Remchingen (DE)
(72) Erfinder: LUDEWIG, Bernd, 69469 Weinheim (DE); DAURELLE, Jean-Yves, 75008 Paris (FR)
(74) Vertreter: Liedtke, Markus
(86) Internationale Anmeldenummer: PCT/EP2010/065351
(87) Internationale Veröffentlichungsnummer: WO 2011/047996

(56) Entgegenhaltungen:
- EP-A1- 2 048 479
- WO-A1-2007/009523
- DE-A1-102006 026 871
- GB-A- 2 457 071

## Beschreibung

Die Erfindung betrifft ein Anzeigeinstrument mit einem Zeiger, insbesondere für ein Kraftfahrzeug.

Anzeigeinstrumente, die einen vor einer Skala für eine anzuzeigende Messgröße drehbar gelagerten Zeiger aufweisen, anhand dessen Winkelstellung der gegenwärtige Wert der jeweiligen Messgröße angezeigt wird, sind aus der Kraftfahrzeugtechnik hinreichend bekannt.

Um einen zentralen Bereich des Anzeigeinstrumentes für weitere Anzeigefunktionen ohne störende Wirkungen des Zeigers ausnutzen zu können, ist es bekannt, Hakenzeiger einzusetzen, die auf der dem Betrachter abgewandten Seite des Anzeigeinstrumentes gelagert sind. Solche Hakenzeiger umgreifen eine Kontur des Anzeigeinstrumentes mit einer hakenförmigen Spitze, die die vom Betrachter ersichtliche Zeigerfahne umfasst. Letztere zeigt auf die Stelle der Skala, die dem aktuellen Wert der anzuzeigenden Messgröße entspricht.

Die gattungsbildende EP 2 048 479 A1 beschreibt eine Anzeigevorrichtung mit einem Hakenzeiger, welcher mehrteilig ausgebildet ist.

Die DE 10 2006 026 871 A1 beschreibt eine Zeigeranzeigevorrichtung, insbesondere für ein Kombiinstrument eines Kraftfahrzeuges, umfassend eine Anzeigeskala und einen um eine Drehachse drehbar gelagerten Zeiger, wobei der Zeiger einen hinter der Anzeigeskala zumindest im Wesentlichen radial nach außen gerichteten Zeigerarm aufweist, der mit einer vor der Anzeigeskala bewegbaren Zeigerfahne verbunden ist, und wobei die Zeigerfahne als ein von dem Zeigerarm getrenntes Teil ausgeführt ist, das über Verbindungsmittel mit dem Zeigerarm verbunden ist. Weiterhin ist ein Verfahren zur Montage einer derartigen Zeigeranzeigevorrichtung beschrieben, wobei nach der Montage des Zeigerarms zunächst mindestens ein axial vor der Nabe des Zeigerarms positioniertes Element, insbesondere eine Anzeigeskala und/oder eine Displaybaugruppe, angebracht wird und wobei danach die Zeigerfahne über die Verbindungsmittel mit dem Zeigerarm verbunden und/oder in ihre endgültige Position gebracht wird.

Die GB 2 457 071 A beschreibt eine Anzeigevorrichtung mit einem Hakenzeiger, welcher mehrteilig ausgebildet ist.

Die WO 2007/009 523 A1 beschreibt eine Anzeigeeinrichtung zur analogen Anzeige von Größen, Parametern etc., welche einen Schrittmotor, ein Anzeigeelement, das mittels des Schrittmotors verstellbar ist, ein Elektronikteil, mittels dem den anzeigbaren Größen, Parametern etc. entsprechende Signale empfangbar sind, umfasst und wobei der Schrittmotor entsprechend den empfangenen Signalen steuer- bzw. regelbar ist, und eine LED, mittels der das Anzeigeelement beleuchtbar ist. Es wird vorgeschlagen, dass die LED so ausgebildet ist, dass mittels ihrer Lichtstrahlung in unterschiedlichen Farben abstrahlbar ist.

Aufgabe der Erfindung ist es, ein verbessertes Anzeigeinstrument anzugeben, welches eine Nutzung des zentralen Bereichs des Anzeigeinstrumentes ermöglicht.

Die Aufgabe wird erfindungsgemäß durch die im Anspruch 1 angegebenen Merkmale gelöst.

Vorteilhafte Weiterbildungen der Erfindung sind Gegenstand der Unteransprüche.

Bei einem erfindungsgemäßen Anzeigeinstrument mit einem um eine Zeigerachse drehbar angeordneten Zeiger mit einem Zeigerkoppelteil, insbesondere einer Zeigernabe, und einer Zeigerfahne und mindestens einem zwischen diesen angeordneten Zeigerabschnitten, ist zumindest einer der Zeigerabschnitte zwischen dem Zeigerkoppelteil und der Zeigerfahne in einer Grundstruktur gehalten.

Durch eine solche mittels der Grundstruktur gebildete Halterung eines der Zeigerabschnitte des Zeigers ist eine besonders hohe Steifigkeit und Festigkeit des Zeigers gegeben. Durch Anordnung der Grundstruktur an einem der Zeigerabschnitte ist die Grundstruktur nicht sichtbar für den Betrachter des Anzeigeinstruments, so dass dieses ohne Sichtstörungen gut ablesbar ist.

Eine vorteilhafte Weiterbildung der Erfindung sieht vor, dass der Zeiger als Lichtleiter ausgebildet ist, wobei zumindest der koppelnahe Bereich des Zeigers von der Grundstruktur tragend gehalten ist. Auch bei einem als Lichtleiter ausgebildeten Zeiger, der in der Regel keine ausreichend hohe Stabilität aufweist, ist dadurch eine genaue und stabile Halterung und Ausrichtung des Zeigers ermöglicht.

Eine Weiterbildung der Erfindung sieht vor, dass der an den Zeigerkoppelteil angrenzende Zeigerabschnitt in der Grundstruktur gehalten ist. Dies ermöglicht eine besonders gute Festigkeit im zentralen Bereich des Anzeigeinstruments, wodurch das Anzeigeinstrument zur zentralen Aufnahme einer optischen Ausgabeeinheit, insbesondere einer Bildschirmeinheit, z. B. einer LCD-, TFT- oder OLED-Einheit ausgebildet ist.

Die Grundstruktur ist erfindungsgemäß als ein Grundrahmen ausgebildet, der den mindestens einen Zeigerabschnitt beidseitig entlang dessen Längsausdehnung versteift. Eine solche rahmenförmige Grundstruktur weist bei einem geringen Gewicht eine hohe Festigkeit auf.

Dabei ist der Grundrahmen aus einem Drachenviereck gebildet. Dabei ist der Grundrahmen aus zwei benachbarten Seitenpaaren mit jeweils gleich langen Seiten gebildet, wobei die Diagonalen des Vierecks senkrecht aufeinander stehen und eine der Diagonalen eine Symmetrieachse bildet, die die andere Diagonale halbiert. Alternativ kann der Grundrahmen rautenförmig, d.h. als eine Raute mit vier gleich langen Seiten ausgebildet sein, wobei beide Diagonalen Symmetrieachsen sind. Eine solche viereckige und offene Rahmenstruktur ist einfach ausgebildet und herzustellen und weist bei einer hohen Festigkeit ein geringes Gewicht auf.

Für eine besonders stabile Ausbildung des Zeigers bildet die Längsachse des mindestens einen Zeigerabschnitts eine Symmetrieachse des Grundrahmens. Bei Ausbildung des Grundrahmens als Drachenviereck bildet die Längsachse des Zeigerabschnitts die Symmetrieachse des Drachenvierecks. Bei Ausbildung des Grundrahmens als Raute bildet die Längsachse des Zeigerabschnitts eine der beiden Symmetrieachsen.

Vorzugsweise sind die Seiten des Grundrahmens jeweils als ein offenes Profil, insbesondere als ein L-, T- oder I-Profil ausgebildet. Dies stellt eine weitere Möglichkeit zur Reduzierung des Gewichts dar.

Gemäß einer vorteilhaften Weiterbildung der Erfindung verläuft entlang der rechtwinklig zum Zeigerabschnitt verlaufenden Diagonale des Grundrahmens ein Quersteg. Dieser Quersteg verbindet die Seitenpaare des Grundrahmens und bewirkt eine weitere Erhöhung der Stabilität und Festigkeit.

Eine weitere Ausführungsform sieht vor, dass das Zeigerkoppelteil den Quersteg durchdringend und senkrecht von diesem abstehend angeordnet ist. Hierdurch ist das Zeigerkoppelteil besonders stabil gehalten, so dass auf dieses weitere Komponenten des Anzeigeinstrumentes anordbar sind. Insbesondere können auf das Zeigerkoppelteil, welches zentral angeordnet ist, ein Schrittmotor zur Ansteuerung des Zeigers und eine am Schrittmotor angeordnete Leiterplatte sowie eine Bildschirmeinheit angeordnet sein.

In einer besonders einfachen Ausführungsform ist am Quersteg senkrecht eine Steckhülse angeformt, in welche das Zeigerkoppelteil einsteckbar ist.

Je nach Ausführungsform des Anzeigeinstrumentes ist das Zeigerkoppelteil oder das Zeigerkoppelteil zusammen mit der Steckhülse in ein Anschlussteil eines Schrittmotors einsteckbar oder auf eine Abtriebswelle eines Schrittmotors aufsteckbar. Dies stellt eine besonders einfache und sichere Kopplung des Zeigers mit dem als Schrittmotor ausgebildeten Antrieb zur Verstellung des Zeigers dar.

In der Ausführungsform der Erfindung ist der Schrittmotor in Betrachtungsrichtung vor der Grundstruktur angeordnet, wobei eine Leiterplatte in Betrachtungsrichtung vor dem Schrittmotor angeordnet ist. Mit anderen Worten: Der Schrittmotor ist auf der von der Bestückungsseite der Leiterplatte abgewandten Seite an dieser befestigt. Dies stellt eine sehr kompakte Bauweise des Anzeigeinstruments dar, indem sowohl der Schrittmotor als auch die Leiterplatte und mit dieser gegebenenfalls ein Display oder eine andere Beleuchtungseinheit, im zwischen den Zeigerabschnitten und der Zeigerfahne gebildeten Freiraum, angeordnet sind.

In einer alternativen nicht erfindungsgemäßen Ausführungsform ist der Schrittmotor in Betrachtungsrichtung hinter der Grundstruktur angeordnet, wobei eine Leiterplatte in Betrachtungsrichtung hinter dem Schrittmotor angeordnet ist. Mit anderen Worten: Der Schrittmotor ist auf der Bestückungsseite der Leiterplatte befestigt. Dies stellt eine optimale Bauweise des Anzeigeinstruments mit einem Zeiger dar.

Im Folgenden werden unter Bezugnahme auf die beigefügten Zeichnungen rein beispielhaft aufzufassende Ausführungsformen der Erfindung beschrieben.

Es zeigen:
- **Fig. 1**: schematisch den prinzipiellen Aufbau des Ausführungsbeispiels eines erfindungsgemäßen Anzeigeinstrumentes mit einem Hakenzeiger, erster Konstruktionsvariante, in einer Seitenansicht;
- **Fig. 2**: den Hakenzeiger, erster Konstruktionsvariante, in perspektivischer, schematischer Einzeldarstellung;
- **Fig. 3**: schematisch den prinzipiellen Aufbau eines zweiten nicht erfindungsgemäßen Ausführungsbeispiels eines Anzeigeinstrumentes mit einem Hakenzeiger, zweiter Konstruktionsvariante, in einer Seitenansicht; und
- **Fig. 4**: den Hakenzeiger, erster Konstruktionsvariante, in perspektivischer, schematischer Einzeldarstellung.

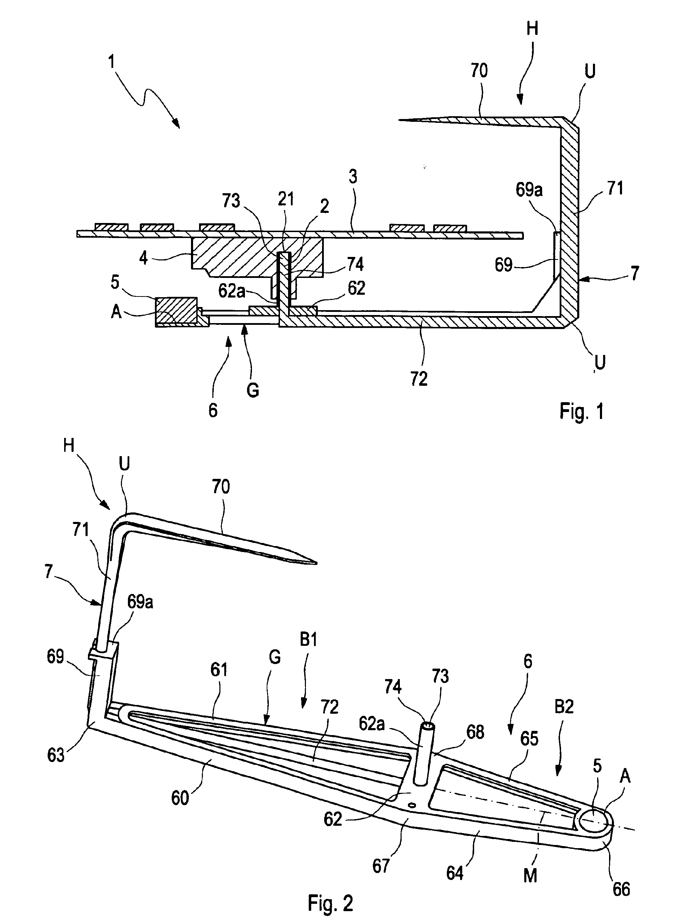

**Figur 1** zeigt in einer Seitenansicht schematisch den prinzipiellen Aufbau eines ersten Ausführungsbeispiels eines erfindungsgemäßen Anzeigeinstrumentes 1 mit einem als Hakenzeiger H ausgebildeten Zeiger, erster Konstruktionsvariante.

Der Hakenzeiger H weist eine Zeigerfahne 70 und ein als Zeigernabe ausgebildetes Zeigerkoppelteil 74 auf, das mit einem Antrieb zur Drehung des Hakenzeigers H koppelbar ist. Zwischen der Zeigerfahne 70 und dem Zeigerkoppelteil 74 umfasst der Hakenzeiger H Zeigerabschnitte 71 und 72, die zueinander abgewinkelt, insbesondere in einem Winkel von 90° zueinander abgewinkelt, angeordnet sind. Durch eine derartige zweifache Abwinkelung des Hakenzeigers H unter Bildung der Zeigerabschnitte 71 und 72 verläuft der Zeigerabschnitt 72 im Wesentlichen parallel zur Zeigerfahne 70 unter Bildung eines Freiraums, dessen Breite der Länge des Zeigerabschnitts 71 entspricht. Das Zeigerkoppelteil 74 ist gegenüber dem angrenzenden Zeigerabschnitt 72 ebenfalls um 90 ° abgewinkelt und verläuft im Wesentlichen parallel zum Zeigerabschnitt 71. Das Zeigerkoppelteil 74 bildet dabei einen freien Endabschnitt 73 des Hakenzeigers H.

Dieser freie Endabschnitt 73 und somit das Zeigerkoppelteil 74 ist in einem Antrieb zur Ansteuerung des Hakenzeigers H ein- oder aufsteckbar.

Ein auf der Rückseite einer Leiterplatte 3 vorgesehener Schrittmotor 4 steuert den Hakenzeiger H, erster Konstruktionsvariante, über das Zeigerkoppelteil 74 an, das hier als Zeigerachse 2 ausgebildet ist.

Das Zeigerkoppelteil 74 kann beispielsweise in ein entsprechendes Anschlussteil des Schrittmotors 4 eingesteckt sein oder eine Abtriebswelle des Schrittmotors 4 umschließen.

Die Zeigerachse 2, um die der Hakenzeiger H, erster Konstruktionsvariante, drehbar gelagert ist, erstreckt sich von ihrem der Leiterplatte 3 zugewandten Stirnende 21 von der Leiterplatte 3 weg in den Raum. Die Zeigerachse 2 ist annähernd senkrecht zur Ebene der Leiterplatte 3 angeordnet.

In einem Aufnahmeabschnitt A einer (in Fig. 1 nicht ersichtlichen) Grundstruktur 6, die in **Fig. 2** dargestellt ist, ist ein Gegengewicht 5 eingebettet, das der Minimierung der Zeigerunwucht dient. Der Hakenzeiger H, erster Konstruktionsvariante, umgreift mit einem im Querschnitt etwa u-förmigen Bereich die übereinander liegenden Ränder von Leiterplatte 3 und einer (nicht dargestellten) Instrumentenskala oder einer optischen Ausgabeeinheit, z. B. einer LCD-, TFT- oder OLED-Einheit.

Die Zeigerfahne 70 erstreckt sich abgewinkelt in einem Winkel von etwa 90° von dem einen Zwischenabschnitt bildenden Zeigerabschnitt 71 eines in Fig. 2 näher beschriebenen Winkelteils 7 in einer bezüglich der Zeigerachse 2 radialen Richtung einwärts, d. h. auf die geometrische Längsachse der Zeigerachse 2 zu.

**Figur 2** zeigt den Hakenzeiger H, erster Konstruktionsvariante, in einer perspektivischen, schematischen Einzeldarstellung. Der Hakenzeiger H, erster Konstruktionsvariante, umfasst die Grundstruktur 6, die zur Verringerung der Massenträgheit des Hakenzeigers H in Leichtbauweise, also nicht durchgehend massiv ausgestaltet ist.

Für eine hinreichende Festigkeit und Steifigkeit des Hakenzeigers H ist zumindest der Zeigerabschnitt 72 zwischen dem Zeigerkoppelteil 74 und der Zeigerfahne 70 in der Grundstruktur 6 gehalten. Der Zeigerabschnitt 72 ist der an das Zeigerkoppelteil 74 angrenzende Zeigerabschnitt. Durch eine derartige zusätzliche Versteifung des Hakenzeigers H, nahe des Zeigerkoppelteils 74 und somit der Zeigernabe, kann das Anzeigeinstrument 1 zentral zusätzlich zur Leiterplatte 3 eine optische Anzeige, wie ein Display, aufnehmen.

Für eine besonders einfache und leichte Konstruktion der Grundstruktur 6 ist diese als ein Grundrahmen G ausgebildet, der den mindestens einen Zeigerabschnitt 72 beidseitig entlang dessen Längsausdehnung versteift.

In der dargestellten Ausführungsform ist der Grundrahmen G aus einem Drachenviereck gebildet, wobei die Längsachse des Zeigerabschnitts 72 die Symmetrieachse (Mittellinie M) des Drachenvierecks und somit des Grundrahmens G bildet. Alternativ und nicht näher dargestellt, kann der Grundrahmen G auch als Raute ausgebildet sein.

Der Grundrahmen G weist darüber hinaus einen Quersteg 62 auf, der sich entlang der rechtwinklig zum Zeigerabschnitt 72 verlaufenden Diagonale des Grundrahmens G erstreckt. Das Zeigerkoppelteil 74 ist den Quersteg 62 durchdringend und senkrecht von diesem mit dem freien Endabschnitt 73 abstehend angeordnet.

Zur Versteifung des Zeigerkoppelteils 74 ist an dem Quersteg 62 und somit an dem Grundrahmen G senkrecht eine Steckhülse 62a angeformt, in welche das Zeigerkoppelteil 74 einsteckbar ist.

Die Seiten des Grundrahmens G sind vorzugsweise jeweils als ein offenes Profil ausgebildet. Im Ausführungsbeispiel sind die Seiten als ein L-Profil ausgeführt, dies stellt gegenüber einem geschlossenen Profil eine besonders leichte und gleichzeitig hinreichend feste Ausführungsform dar. Alternativ können die Seiten als ein T- oder I-Profil ausgebildet sein.

Im Detail ist die Grundstruktur 6 bezüglich der zur Zeigerachse 2 senkrecht verlaufenden Mittellinie M spiegelsymmetrisch ausgebildet und umfasst einen ersten Basisabschnitt B1, der aus zwei länglichen ersten Schenkeln 60, 61 (= einem ersten Paar von insbesondere gleich langen Seiten) besteht. Die ersten Schenkel 60, 61 erstrecken sich von dem Quersteg 62 weg und stoßen mit ihren äußeren Enden unter Bildung einer ersten Spitze 63 aufeinander, die in eine erste Richtung weist.

Die Grundstruktur 6 umfasst einen zweiten Basisabschnitt B2, der aus zwei länglichen zweiten Schenkeln 64, 65 (einem zweiten Paar von insbesondere gleich langen Seiten) besteht. Die kürzer als die ersten Schenkel 60, 61 bemessenen zweiten Schenkel 64, 65 erstrecken sich vom Quersteg 62 weg und stoßen ihrerseits mit ihren freien Enden, unter Bildung einer zweiten Spitze 66, aufeinander, die in eine zur ersten Richtung entgegengesetzte zweite Richtung weist.

Die ersten Schenkel 60, 61 treffen paarweise mit den zweiten Schenkeln 64, 65 in zwei sich gegenüberliegenden Eckbereichen 67, 68 aufeinander, so dass die zweiten Schenkel 64, 65 gemeinsam mit den ersten Schenkeln 60,61 den viereckigen, insbesondere drachenviereckförmigen Grundrahmen G bilden.

In einer nicht dargestellten Ausführungsform kann der Grundrahmen G auch rautenförmig ausgebildet sein, wobei alle Schenkel 60, 61, 64, 65 gleich lang sind.

Am Quersteg 62, dessen Längsachse senkrecht zur Mittellinie M angeordnet ist, setzen die Zeigerachse 2 und die Steckhülse 62a an. Die Zeigerachse 2 und die Steckhülse 62a erstrecken sich vom Quersteg 62 empor in den Raum. Der Quersteg 62 verbindet die beiden Eckbereiche 67, 68 des Grundrahmens G miteinander. Die Steckhülse 62a kann einstückig mit dem Grundrahmen G ausgebildet oder an diesem angeformt sein.

Im Bereich der zweiten Spitze 66 ist der Aufnahmeabschnitt A ausgebildet, in dem das mit dem Hakenzeiger H schwenkbar um die Zeigerachse 2 drehbar gelagerte, beispielsweise kugelförmige Gegengewicht 5 eingebettet ist. Das Gegengewicht 5 ist beispielsweise vollständig oder teilweise aus Metall, etwa aus Stahl hergestellt, während die Grundstruktur 6 beispielsweise vollständig oder teilweise aus Kunststoff hergestellt ist.

Die Grundstruktur 6 umfasst ferner einen beispielsweise einstückig mit dem Grundrahmen G verbundenen Halteabschnitt 69, der an der ersten Spitze 63 ansetzt und sich in zur Zeigerachse 2 paralleler Richtung von der ersten Spitze 63 weg erstreckt.

Die zu ihrem freien Ende hin spitz zulaufende Zeigerfahne 70 ist als umgebogener erster Endabschnitt des Winkelteils 7 ausgebildet. Das Winkelteil 7 weist ferner den sich vom Quersteg 62 zur ersten Spitze 63 entlang der Mittellinie M erstreckenden Grundabschnitt als Zeigerabschnitt 72 auf, der in den um annähernd 90 abgewinkelten Zwischenabschnitt als Zeigerabschnitt 71 übergeht, an dessen Ende die Zeigerfahne 70 ansetzt.

Der als Grundabschnitt ausgebildete Zeigerabschnitt 72 kann zum Beispiel so ausgelegt und in die Grundstruktur 6 integriert sein, dass er die Funktion einer strukturellen Verstärkung des Grundrahmens G erfüllt.

Ein am Halteabschnitt 69 angeformter, gabelförmiger Halteansatz 69a umgreift klemmend den als Zwischenabschnitt ausgebildeten Zeigerabschnitt 71.

Das insbesondere einstückig ausgestaltete Winkelteil 7 umfasst neben der Zeigerfahne 70, den einen Zwischenabschnitt bildenden Zeigerabschnitt 71 und den einen Grundabschnitt bildenden Zeigerabschnitt 72 sowie einen innerlich der Steckhülse 62a entlang der Zeigerachse 2 koaxial mit letzterer verlaufenden zweiten Endabschnitt 73, der das Zeigerkoppelteil 74 bildet.

Um das Anzeigeinstrument 1 auch bei Dunkelheit ablesen zu können, kann das Winkelteil 7 und somit der Zeiger H vollständig oder bereichsweise aus einem Licht leitenden Material ausgeführt sein, in das an geeigneter Stelle Licht eingekoppelt und durch den Hakenzeiger H, erster Konstruktionsvariante, gelenkt wird. Um das Licht an einer gewünschten Stelle auszukoppeln können hierfür geeignete Auskoppelmittel am Winkelteil 7 vorgesehen sein.

Zur Weiterleitung des eingekoppelten Lichts von der Einkoppelstelle bis zur Zeigerfahne 70 weist der Zeiger H, d.h. das Winkelteil 7, Umlenkflächen U auf, an welchen das Licht durch Reflexion bis zur Zeigerfahne 70 und somit der Zeigerspitze umlenkbar ist.

Mittels der Grundstruktur 6 wird der als Lichtleiter ausgebildete Zeiger H zumindest im koppelnahen Bereich, d.h. im Bereich der Kopplung des Zeigers H mit dem Schrittmotor 4, tragend gehalten und abgestützt. Dabei sind zumindest das Zeigerkoppelteil 74, der Zeigerabschnitt 72 und zumindest teilweise der Zeigerabschnitt 71 tragend von der Grundstruktur 6 gehalten und auf dieser abgestützt.

Es ist auch denkbar das Winkelteil 7 mit Licht leitenden Mitteln, etwa Folien zu versehen, um so den zuvor beschriebenen Beleuchtungszweck zu erfüllen.

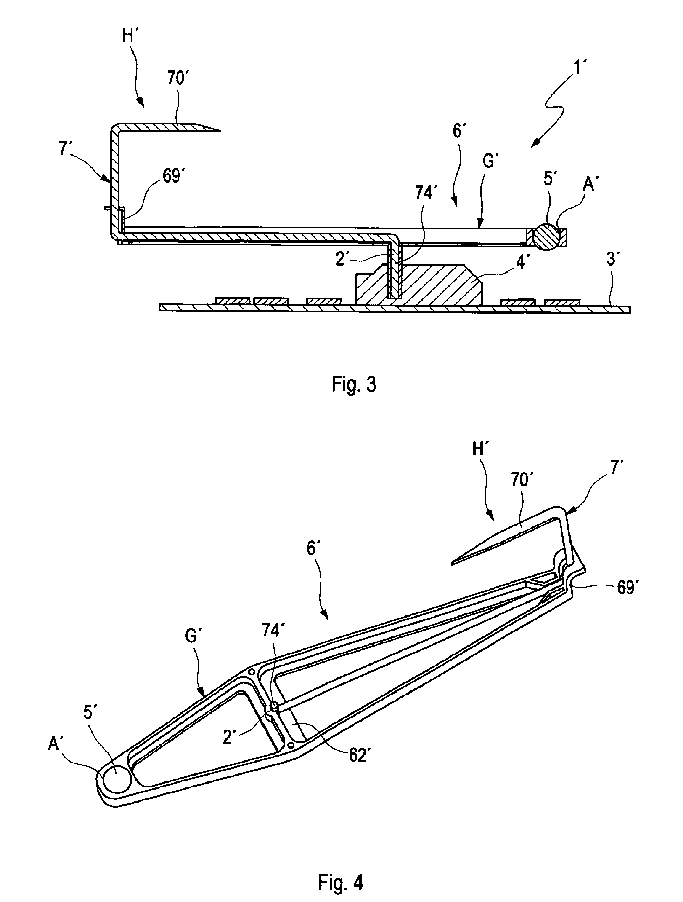

In den **Figuren 3** und **4** ist ein weiteres nicht erfindungsgemäßes Ausführungsbeispiel gezeigt, wobei für gleiche Bauteile die gleichen, ggf. mit einem Zusatz in Form eines kleinen Striches gekennzeichneten Bezugszeichen wie beim ersten Ausführungsbeispiel, vergeben sind.

Figur 3 zeigt in einer Seitenansicht den prinzipiellen Aufbau des zweiten Ausführungsbeispiels eines Anzeigeinstrumentes 1' mit einem in einem Grundrahmen G' gehaltenen Hakenzeiger H' mit Zeigerfahne 70', zweiter Konstruktionsvariante, wobei der Grundrahmen G' zur Minimierung der Zeigerunwucht einen Aufnahmeabschnitt A' mit eingebettetem Gegengewicht 5' aufweist.

Konstruktive Unterschiede zwischen der Ausführungsvariante der Figuren 1 und 2 zu derjenigen der Figuren 3 und 4 ergeben sich zunächst aus den unterschiedlichen Positionierungen der Schrittmotoren 4, 4' bezüglich der Leiterplatte 3, 3'. Während der Schrittmotor 4 beim ersten Ausführungsbeispiel auf der Rückseite der Leiterplatte 3 angeordnet ist, ist der Schrittmotor 4' beim zweiten Ausführungsbeispiel auf der Vorderseite der Leiterplatte 3' angeordnet. Der auf der Vorderseite der Leiterplatte 3' vorgesehene Schrittmotor 4' steuert den Hakenzeiger H', zweiter Konstruktionsvariante, über die Zeigerachse 2' und das Zeigerkoppelteil 74' an.

**Figur 4** zeigt den Hakenzeiger H', zweiter Konstruktionsvariante, in perspektivischer, schematischer Einzeldarstellung. Der Hakenzeiger H', zweiter Konstruktionsvariante umfasst erneut eine Grundstruktur 6' mit einem drachenviereckförmigen (alternativ einem rautenförmigen) Grundrahmen G' sowie einem Winkelteil 7' und unterscheidet sich vom Hakenzeiger H, erster Variante, lediglich durch eine unterschiedliche Relativanordnung zwischen der Zeigerachse 2' und der Grundstruktur 6'.

Während sich beim Hakenzeiger H, erster Variante, die Zeigerachse 2 und der Halteabschnitt 69 in gleicher Richtung von der durch den Grundrahmen G definierten Ebene weg erstrecken, erstrecken sich beim Hakenzeiger H', zweiter Variante, die (in Fig. 4 nicht ersichtliche) Zeigerachse 2' und der Halteabschnitt 69' in entgegen gesetzten Richtungen von der durch den Grundrahmen G' definierten Ebene voneinander weg.

Wichtige Aspekte der Erfindung können als Fazit auch formuliert werden als: Fertigung von Zeigerinstrumenten mit Hakenzeigern, deren Antrieb auf der Rückseite einer Leiterplatte montiert ist und dessen Achse von der Leiterplatte weg weist (so dass das Erfordernis einer Bohrung durch die Leiterplatte entfällt). Dabei erhält der Zeiger zur Verminderung der Massenträgheit eine Fachwerkstruktur und zur Beseitigung der Unwucht ein Gegengewicht.

### Bezugszeichen

| | |
|---|---|
| 1 | erstes Ausführungsbeispiel eines Anzeigeinstrumentes |
| 1' | zweites Ausführungsbeispiel eines Anzeigeinstrumentes |
| 2, 2' | Zeigerachse |
| 3, 3' | Leiterplatte |
| 4, 4' | Schrittmotor |
| 5, 5' | Gegengewicht |
| 6, 6' | Grundstruktur |
| 7, 7' | Winkelteil |
| 21 | Stirnende (der Zeigerachse) |
| 60, 61 | erste Schenkel |
| 62 | Quersteg |
| 62a | Steckhülse |
| 63 | erste Spitze |
| 64, 65 | zweite Schenkel |
| 66 | zweite Spitze |
| 67, 68 | Eckbereiche |
| 69, 69' | Halteabschnitt |
| 69a | Halteansatz |
| 70, 70' | Zeigerfahne |
| 71 | Zeigerabschnitt (Zwischenabschnitt) |
| 72 | Zeigerabschnitt (Grundabschnitt) |
| 73 | Endabschnitt |
| 74, 74' | Zeigerkoppelteil |
| A | Aufnahmeabschnitt |
| B1 | erster Basisabschnitt |
| B2 | zweiter Basisabschnitt |
| G, G' | Grundrahmen |
| H | Hakenzeiger, erster Konstruktionsvariante |
| H' | Hakenzeiger, zweiter Konstruktionsvariante |
| M | Mittellinie |
| U | Umlenkflächen |

## Patentansprüche

1. Anzeigeinstrument (1, 1') mit einem um eine Zeigerachse (2, 2') drehbar angeordneten Zeiger (H, H') mit einem Zeigerkoppelteil (74, 74') und einer Zeigerfahne (70, 70') und mindestens einem zwischen diesen angeordneten Zeigerabschnitten (71 bis 72), wobei
zwischen dem Zeigerkoppelteil (74, 74') und der Zeigerfahne (70, 70') zumindest einer der Zeigerabschnitte (71 bis 72), insbesondere der an dem Zeigerkoppelteil (74, 74') angrenzende Zeigerabschnitt (72) als ein Grundrahmen (6, 6') ausgebildet ist, **dadurch gekennzeichnet, dass** der Grundrahmen (6, 6') aus einem Drachenviereck gebildet ist, wobei ein
Schrittmotor (4, 4') in Betrachtungsrichtung des Anzeigeinstruments (1, 1') vor dem Grundrahmen (6, 6') angeordnet ist und wobei eine Leiterplatte (3, 3') in Betrachtungsrichtung vor dem Schrittmotor (4, 4') angeordnet ist.

2. Anzeigeinstrument (1, 1') nach Anspruch 1,
**dadurch gekennzeichnet, dass** der Grundrahmen (6, 6') mindestens einen Zeigerabschnitt (72) beidseitig entlang dessen Längsausdehnung versteift.

3. Anzeigeinstrument (1, 1') nach Anspruch 1 oder 2,
**dadurch gekennzeichnet, dass** der Zeiger (H, H') als Lichtleiter ausgebildet ist, wobei zumindest der koppelnahe Bereich des
Zeigers (H, H') von dem Grundrahmen (6, 6') tragend gehalten ist.

4. Anzeigeinstrument (1, 1') nach einem der Ansprüche 2 oder 3, **dadurch gekennzeichnet, dass** die Längsachse des mindestens einen Zeigerabschnitts (72) eine Symmetrieachse des Grundrahmens (6,6') bildet.

5. Anzeigeinstrument (1, 1') nach einem der Ansprüche 2 bis 4,
**dadurch gekennzeichnet, dass** entlang der rechtwinklig zum Zeigerabschnitt (72) verlaufenden Diagonale des Grundrahmens (6, 6') ein Quersteg (62, 62') verläuft.

6. Anzeigeinstrument (1, 1') nach Anspruch 5,
**dadurch gekennzeichnet, dass** das Zeigerkoppelteil (74, 74') den Quersteg (62, 62') durchdringend und senkrecht von diesem abstehend angeordnet ist.

7. Anzeigeinstrument (1, 1') nach einem der vorhergehenden Ansprüche, **dadurch gekennzeichnet, dass** das Zeigerkoppelteil (74, 74') in ein Anschlussteil eines Schrittmotors (4, 4') einsteckbar oder auf eine Antriebswelle eines Schrittmotors (4, 4') aufsteckbar ist.

## Claims

1. Indicating instrument (1, 1') with a pointer (H, H') which is rotatable around a pointer axis (2, 2') and has a pointer coupling part (74, 74') and a pointer flag (70, 70') and at least one pointer section (71 through 72) arranged between the former, while, between the pointer coupling part (74, 74') and the pointer flag (70, 70'), at least one of the pointer sections (71 through 72), particularly the pointer section (72) adjacent to the pointer coupling part (74, 74'), is designed as a base frame (6, 6'), **characterized in that** the base frame (6, 6') is formed by a kite, while a stepping motor (4, 4') is arranged according to the viewing direction of the indicating instrument (1, 1') in front of the base frame (6, 6') and while a printed-circuit board (3, 3') is arranged according to the viewing direction in front of the stepping motor (4, 4').

2. Indicating instrument (1, 1') as claimed in claim 1, **characterized in that** the base frame (6, 6') is stiffening at least one pointer section (72) on both sides along its longitudinal extension.

3. Indicating instrument (1, 1') as claimed in claim 1 or 2, **characterized in that** the pointer (H, H') is formed as an optical waveguide while at least the area close to the coupling of the pointer (H, H') is held and supported by the base frame (6, 6').

4. Indicating instrument (1, 1') as claimed in any claim 2 or 3, **characterized in that** the longitudinal axis of the at least one pointer section (72) forms a symmetry axis of the base frame (6.6').

5. Indicating instrument (1, 1') as claimed in any claim 2 through 4, **characterized in that** a transverse web (62, 62') runs along the diagonal line of the base frame (6, 6') which is perpendicular to the pointer section (72).

6. Indicating instrument (1, 1') as claimed in claim 5, **characterized in that** the pointer coupling part (74, 74') is arranged so as to penetrate the transverse web (62, 62') and project vertically from the latter.

7. Indicating instrument (1, 1') as claimed in any preceding claim, **characterized in that** the pointer coupling part (74, 74') is pluggable on a connecting part of a stepping motor (4, 4') or on a drive shaft of a stepping motor (4, 4').

## Revendications

1. Instrument indicateur (1, 1') avec une aiguille (H, H') disposée de manière à être rotative autour d'un axe d'aiguille (2, 2'), avec une pièce d'accouplement d'aiguille (74, 74'), une pointe d'aiguille (70, 70') et au moins un segment d'aiguille (71 à 72) disposé entre celles-ci, au moins un des segments d'aiguille (71 à 72) entre la pièce d'accouplement d'aiguille (74, 74') et la pointe d'aiguille (70, 70'), en particulier le segment d'aiguille (72) adjacent à la pièce d'accouplement d'aiguille (74, 74'), étant réalisé comme cadre de base (6, 6') entre la pièce d'accouplement d'aiguille (74, 74') et la pointe d'aiguille (70, 70'), **caractérisé en ce que** le cadre de base (6, 6') est formé par un cerf-volant, un moteur pas à pas (4, 4') étant disposé en avant du cadre de base (6, 6'), dans le sens d'observation de l'instrument indicateur (1, 1'), et une plaquette imprimée (3, 3') étant disposée en avant du moteur pas à pas (4, 4') dans le même sens d'observation.

2. Instrument indicateur (1, 1') selon la revendication 1, **caractérisé en ce que** le cadre de base (6, 6') renforce au moins un segment d'aiguille (72) de part et d'autre de celui-ci sur son extension longitudinale.

3. Instrument indicateur (1, 1') selon la revendication 1 ou la revendication 2, **caractérisé en ce que** l'aiguille (H, H') est réalisée comme conducteur de lumière, au moins la partie de l'aiguille (H, H') proche de l'accouplement étant maintenue porteuse à l'avant du cadre de base (6, 6').

4. Instrument indicateur (1, 1') selon la revendication 2 ou la revendication 3, **caractérisé en ce que** l'axe longitudinal du ou des segments d'aiguille (72) forme un axe de symétrie du cadre de base (6,6').

5. Instrument indicateur (1, 1') selon l'une des revendications 2 à 4, **caractérisé en ce qu'**une entretoise (62, 62') s'étend le long de la diagonale du cadre de base (6, 6') perpendiculaire au segment d'aiguille (72).

6. Instrument indicateur (1, 1') selon la revendication 5, **caractérisé en ce que** la pièce d'accouplement d'aiguille (74, 74') est disposée de manière à traverser l'entretoise (62, 62') et à saillir perpendiculairement de celle-ci.

7. Instrument indicateur (1, 1') selon l'une des revendications précédentes, **caractérisé en ce que** la pièce d'accouplement d'aiguille (74, 74') peut être fichée dans une pièce de connexion d'un moteur pas à pas (4, 4') ou sur un arbre d'entraînement d'un moteur pas à pas (4, 4').
